(19) Europäisches Patentamt
European Patent Office
Office européen des brevets

(11) **EP 0 779 002 B1**

(12) **FASCICULE DE BREVET EUROPEEN**

(45) Date de publication et mention
de la délivrance du brevet:
**23.09.1998 Bulletin 1998/39**

(21) Numéro de dépôt: **95927794.8**

(22) Date de dépôt: **17.08.1995**

(51) Int Cl.⁶: **H04B 7/26**

(86) Numéro de dépôt international:
**PCT/FR95/01095**

(87) Numéro de publication internationale:
**WO 96/07249 (07.03.1996 Gazette 1996/11)**

(54) **PROCEDE DE CONSERVATION DE LA SYNCHRONISATION TEMPORELLE D'UNE STATION MOBILE DANS UN SYSTEME DE RADIOCOMMUNICATION NUMERIQUE CELLULAIRE**

VERFAHREN ZUR BEWAHRUNG DER ZEITSYNCHRONISATION EINER MOBILSTATION IN EINEM DIGITALEN ZELLULAREN FUNKNACHRICHTENÜBERTRAGUNGSSYSTEM

METHOD FOR MAINTAINING TIME SYNCHRONIZATION FOR A MOBILE STATION IN A CELLULAR DIGITAL RADIO SYSTEM

(84) Etats contractants désignés:
**CH DE ES FR GB IT LI**

(30) Priorité: **31.08.1994 FR 9410475**

(43) Date de publication de la demande:
**18.06.1997 Bulletin 1997/25**

(73) Titulaire: **ALCATEL ALSTHOM COMPAGNIE GENERALE D'ELECTRICITE**
**75008 Paris (FR)**

(72) Inventeurs:
• **CHERQUI, Nabil**
**F-78500 Sartrouville (FR)**
• **DUGAST, Xavier**
**F-78400 Chatou (FR)**
• **PINAULT, Francis**
**F-92270 Bois-Colombes (FR)**

(74) Mandataire: **El Manouni, Josiane et al**
**COMPAGNIE FINANCIERE ALCATEL**
**Dépt. Propr. Industrielle**
**30, avenue Kléber**
**75116 Paris (FR)**

(56) Documents cités:
**EP-A- 0 240 821**  **WO-A-91/10305**
**FR-A- 2 504 759**  **US-A- 4 270 203**

## Description

Le domaine de l'invention est celui de la radiocommunication numérique cellulaire avec des stations mobiles, notamment selon le standard GSM (Groupe Spécial Mobile).

Plus précisément, l'invention concerne la conservation de la synchronisation temporelle d'une station mobile.

D'une façon générale, un système de radiocommunication numérique cellulaire est mis en oeuvre au sein d'un réseau de cellules géographiques parcouru par des stations mobiles. Une station de base est associée à chaque cellule, et une station mobile communique par l'intermédiaire de la station de base associée à la cellule dans laquelle elle se trouve.

De plus, ce type de système met généralement en oeuvre un multiplexage temporel, selon la technique dite AMRT (Accès Multiple à Répartition dans le Temps). Cette technique connue consiste à diviser le temps en trames de durée fixe et prédéterminée, elles-mêmes divisées en intervalles de temps (time slots en anglosaxon). Par exemple, dans le standard GSM, une trame est constituée de 8 intervalles de temps. La récurrence d'un intervalle de temps particulier dans chaque trame constitue un canal physique. Cette structure est utilisée aussi bien pour la voie montante (station mobile vers station de base) que pour la voie descendante (station de base vers station mobile). Les données échangées par les stations mobiles et les stations de base sont transmises sous forme de paquets (bursts en anglosaxon) qui sont placés chacun dans un intervalle de temps. Les différents canaux logiques (à savoir les canaux de trafic (TCH pour Traffic CHannel en anglosaxon) et les canaux de contrôle ou canaux de signalisation (CCH pour Control CHannel en anglo-saxon)) sont multiplexés sur les canaux physiques. Par conséquent, les intervalles de temps d'un canal physique donné sont répartis entre plusieurs canaux logiques, donnant ainsi naissance à une nouvelle structure, appelée multitrame.

Avant toute communication, une station mobile doit se synchroniser temporellement par rapport à une station de base.

Du fait de la structure à 3 niveaux des données transmises (à savoir intervalle de temps / trame / multitrame), l'acquisition par la station mobile de la base de temps de la station de base consiste à connaître trois types d'information, à savoir :

- le début des intervalles de temps (afin de récupérer correctement les paquets (bursts) placés dans ces intervalles de temps) ;
- l'emplacement des intervalles de temps dans les trames ; et
- l'emplacement des trames dans les multitrames.

Un compteurs est associé à chacune de ces trois informations. L'ensemble de trois valeurs indiquées par ces compteurs constituent "l'heure du système".

Chacune des stations de base et des stations mobiles possède une horloge (par exemple à 26 MHz dans le cas d'un système GSM) sur laquelle sont fondées les durées élémentaires prises en compte par les différents compteurs assurant la synchronisation temporelle.

L'acquisition par la station mobile de la synchronisation de la station de base n'est pas définitive. En effet, il existe une dérive temporelle entre la station de base et la station mobile.

On considère généralement que cette dérive temporelle est la somme:

- d'une première dérive temporelle due à un écart de fréquence relatif entre la fréquence de la porteuse d'émission de la station de base et la fréquence de la porteuse d'émission de la station mobile ; et
- d'une seconde dérive temporelle due à l'éloignement géographique entre la station de base et la station mobile.

Actuellement, la technique utilisée pour corriger cette dérive temporelle comprend deux phases successives et complètement décorrélées, visant chacune à corriger une des première et seconde dérives temporelles.

Selon cette technique connue, dans une première phase, l'horloge de la station mobile est réglée. Plus précisément, l'oscillateur local (par exemple à 26 MHz pour un système GSM) de l'horloge de la station mobile est compensé en fréquence, de façon que l'écart de fréquence relatif entre les fréquences des porteuses d'émission (par exemple environ 900 MHz pour le GSM) de la station de base et de la station mobile soit inférieur à une valeur limite autorisée (par exemple environ 90 Hz pour le GSM). De cette façon, la première dérive temporelle due à un écart de fréquence relatif est réduit.

Ensuite, dans une seconde phase, la seconde dérive temporelle, ainsi qu'une dérive résiduelle après compensation en fréquence de l'oscillateur local de la station mobile, sont corrigées par modification de la longueur d'une trame. Pour un système GSM (recommandation 5.10 § 6.2), cette correction est apportée par quantum de 1/4 de bit après une campagne de mesure dont la durée doit être comprise entre 1 et 2 secondes, le décalage mesuré devant être supérieur à ± 1/2 bit avant qu'une correction ne soit effectuée.

Cette technique connue de compensation de la dérive temporelle d'une station mobile présente toutefois un inconvénient majeur. En effet, dans la première phase, l'oscillateur local de l'horloge de la station mobile doit être compensé en fréquence. Or, ce type d'oscillateur local, surtout pour des fréquences élevées (par exemple 26 MHz pour un système GSM) est complexe et très coûteux.

L'invention a notamment pour objectif de pallier cet inconvénient majeur de l'état de la technique.

Plus précisément, l'un des objectifs de la présente invention est de fournir un procédé de conservation de la synchronisation temporelle d'une station mobile qui ne nécessite pas une compensation en fréquence de l'oscillateur local de l'horloge de la station mobile.

Cet objectif, ainsi que d'autres qui apparaîtront par la suite, sont atteints selon l'invention à l'aide d'un procédé de conservation de la synchronisation temporelle d'une station mobile par rapport à une station de base, dans un système de radiocommunication numérique cellulaire véhiculant des données sous forme de trames et à accès multiple par répartition dans le temps, ce procédé comprenant les étapes itératives suivantes :

- mesure d'un décalage fréquentiel entre la fréquence de la porteuse d'émission de la station de base à et la fréquence de la porteuse d'émission de la station mobile ;
- transformation dudit décalage fréquentiel en une première dérive temporelle ;
- correction de ladite première dérive temporelle par modification de la longueur d'au moins une desdites trames ;
- mesure d'une seconde dérive temporelle due à l'éloignement géographique entre la station de base et la station mobile ;
- correction de ladite seconde dérive temporelle par modification de la longueur d'au moins une desdites trames.

Le principe de l'invention consiste donc à transformer le décalage fréquentiel en une première dérive temporelle, et à corriger cette première dérive temporelle et la seconde dérive temporelle (due à l'éloignement géographique entre la station mobile et la station de base de la même façon, à savoir en modifiant la longueur d'une trame. Par transformation du décalage fréquentiel en une première dérive temporelle, on entend dans la présente demande une étape de calcul.

De cette façon, contrairement à la première phase de la technique connue de l'art antérieur, la correction de la première dérive due à un écart entre les fréquences des porteuses d'émission de la station mobile et de la station de base ne nécessite pas l'utilisation d'un oscillateur local compensé en fréquence. En effet, la correction se fait temporellement et non pas fréquentiellement.

En d'autres termes, l'oscillateur local de l'horloge de la station mobile peut être moins complexe et donc beaucoup moins coûteux que celui utilisé auparavant.

Il est à noter que puisque l'oscillateur local n'est pas compensé en fréquence, la fréquence de la porteuse d'émission de la station mobile n'est plus corrigée comme c'était le cas dans la technique connue. Il convient donc de prévoir des moyens (qui ne sont pas l'objet de la présente demande de brevet) permettant d'agir sur la fréquence de la porteuse d'émission de la station mobile de façon à annuler l'écart existant par rapport à la fréquence de la porteuse d'émission de la station de base.

Les deux corrections apportées (à savoir celle de la première dérive temporelle et celle de la seconde dérive temporelle) sont corrélées, puisque toutes les deux temporelles. Au contraire, dans la technique utilisée précédemment, les deux corrections apportées (à savoir celle de la dérive fréquentielle et celle de la dérive temporelle) sont décorélées, puisque de natures différentes.

Avantageusement, ladite étape de mesure d'une seconde dérive temporelle consiste à mesurer, à au moins deux instants de mesure distincts, au moins deux valeurs de dérive temporelle instantanée, puis à calculer la moyenne desdites au moins deux valeurs de dérive temporelle instantanée.

Préférentiellement, chacun desdits instants de mesure d'une valeur de dérive temporelle instantanée est décalé dans le temps d'une durée prédéterminée sensiblement fixe par rapport à un instant de réalisation de ladite étape de correction de la première dérive temporelle.

De cette façon, les valeurs mesurées de dérive temporelle instantanée sont toutes affectées sensiblement de la même façon par l'étape de correction de la première dérive temporelle. En d'autres termes, la correction de la première dérive temporelle perturbe très peu la mesure (et donc la correction) de la seconde dérive temporelle.

De façon avantageuse, ladite étape de correction de la seconde dérive temporelle consiste à modifier la longueur d'une des trames dont la longueur est également modifiée dans l'étape de correction de la première dérive temporelle.

Ainsi, certaines itérations de l'étape de correction de la première dérive temporelle coïncident avec une itération de l'étape de correction de la seconde dérive temporelle.

Par exemple, ledit système de radiocommunication numérique cellulaire est du type GSM.

Dans un premier mode de réalisation avantageux de l'invention, lesdites trames étant regroupées en multitrames, lesdites étapes de mesure d'un décalage fréquentiel, de transformation du décalage fréquentiel en une première dérive temporelle, et de correction de la première dérive temporelle sont répétées avec une première période de temps correspondant à une multitrame.

En d'autres termes, la première dérive temporelle est corrigée multitrame par multitrame.

Avantageusement, chaque multitrame comprenant notamment une trame centrale associée à un canal de contrôle associé lent, et une trame d'extrémité non utilisée, ladite étape de mesure d'un décalage fréquentiel est effectuée à la réception de ladite trame centrale de chaque multitrame, et ladite étape de transformation du décalage fréquentiel en une première dérive temporelle est effectuée avec comme durée de référence ladite première période de temps correspondant à l'écart entre deux trames centrales de deux multitrames successives.

Avec un système GSM, ce premier mode de réalisation correspond par exemple au cas où chaque multitrame comprend 26 trames organisées de la façon suivante :

- 12 trames pouvant être associées à des canaux de trafic (TCH : Traffic CHannel),
- 1 trame centrale associée à un canal de contrôle associé lent (SACCH : Slow Associated Control CHannel),
- 12 trames pouvant être associées à des canaux de trafic (TCH),
- 1 trame d'extrémité non utilisée.

On utilise la trame centrale car elle est toujours remplie (alors que certaines trames associées à des canaux de trafic peuvent être inutilisées).

De façon avantageuse, lesdites étapes de mesure d'une seconde dérive temporelle et de correction de la seconde dérive temporelle sont répétées avec une seconde période de temps correspondant à un nombre prédéterminé de multitrames successives.

Avantageusement, une valeur de dérive temporelle instantanée est mesurée sur ladite trame centrale de chaque multitrame, et ladite moyenne est calculée sur un nombre de valeurs de dérive temporelle instantanée égal audit nombre prédéterminé de multitrames successives auquel correspond ladite seconde période de temps.

Il est à noter que, lors de la mesure de la seconde dérive temporelle, chaque valeur de dérive temporelle instantanée est la somme d'une valeur de seconde dérive temporelle (que l'on cherche à mesurer) et d'une valeur de première dérive temporelle cumulée sur une période prédéterminée depuis la dernière correction.

Or si les instants de mesure de la seconde dérive temporelle sont quelconques par rapport aux instants de correction de la première dérive temporelle, la mesure de la seconde dérive temporelle est faussée par la première dérive temporelle.

Afin d'éviter ceci, et comme précisé dans la caractéristique avantageuse présentée ci-dessus, le décalage temporel entre la correction de la première dérive temporelle et la mesure de la seconde dérive temporelle est toujours égal à une demie-multitrame (puisque la correction de la première dérive temporelle est effectuée sur la trame d'extrémité de la multitrame et la mesure de la seconde dérive temporelle est effectuée sur la trame centrale de la multitrame. De cette façon, la mesure de la seconde dérive temporelle n'est pas faussée par la première dérive temporelle.

Dans un second mode de réalisation avantageux de l'invention, les trames étant regroupées en paires de multitrames, deux multitrames successives d'une paire comprenant notamment :

- chacune un premier bloc de trames associé à un canal de contrôle dédié lent,
- l'une ou l'autre un second bloc de trames associé à un canal de contrôle associé lent,

lesdites étapes de mesure d'un décalage fréquentiel, de transformation du décalage fréquentiel en une première dérive temporelle, et de correction de la première dérive temporelle sont répétées avec une troisième période de temps variable correspondant à l'écart entre deux desdits blocs de trames consécutifs.

Avec un système GSM, ce second mode de réalisation correspond par exemple au cas où :

- chacune des deux multitrames d'une même paire comprend 51 trames, dont un premier bloc de 4 trames associé à un canal de contrôle dédié lent (SDCCH : Slow Dedicated Control CHannel),
- une des deux multitrames d'une même paire comprend également un second bloc de 4 trames associé à un canal de contrôle associé lent (SACCH).

On se réfère aux premiers et seconds blocs de trames car ils sont toujours émis.

Préférentiellement, ladite étape de mesure d'un décalage fréquentiel est effectuée à la réception d'au moins une trame de chacun desdits premier et seconds blocs de trames de chaque multitrame, et ladite étape de transformation du décalage fréquentiel en une première dérive temporelle est effectuée avec comme durée de référence ladite troisième période de temps correspondant à l'écart entre deux trames sur lesquelles est réalisée successivement ladite étape de mesure d'un décalage fréquentiel.

Avantageusement, ladite étape de correction de la première dérive temporelle consiste à modifier la longueur d'une trame précédant un premier ou second bloc de trames.

Préférentiellement, lesdites étapes de mesure d'une seconde dérive temporelle et de correction de la seconde dérive temporelle sont répétées avec une quatrième période de temps correspondant à un nombre prédéterminé de paires de multitrames successives.

De façon avantageuse, une valeur de dérive temporelle instantanée est mesurée sur chacune des trames de chacun des premiers et seconds blocs de trames, et ladite moyenne est calculée sur un nombre de valeurs de dérive temporelle instantanée égal au nombre de trames comprises dans les premiers et seconds blocs de trames de paires de multitrames successives auxquelles correspond ladite quatrième période de temps sensiblement fixe.

D'autres caractéristiques et avantages de l'invention apparaîtront à la lecture de la description suivante de deux modes de réalisation préférentiels de l'invention, donnée à titre d'exemple indicatif et non limitatif, et des dessins annexés, dans lesquels :

- la figure 1 présente un schéma de principe du procédé de l'invention;
- la figure 2 présente un schéma explicatif d'un premier mode de réalisation du procédé de l'invention ;
- la figure 3 présente une première structure de multitrame utilisée dans le premier mode de réalisation présenté sur la figure 2 ;
- la figure 4 présente un schéma explicatif d'un second mode de réalisation du procédé de l'invention ;
- la figure 5 présente une seconde structure de multitrame utilisée dans le second mode de réalisation présenté sur la figure 4.

L'invention concerne donc un procédé de conservation de la synchronisation temporelle d'une station mobile par rapport à une station base, dans un système de radiocommunication numérique cellulaire.

Un tel système de radiocommunication numérique cellulaire est mis en oeuvre au sein d'un réseau constitué d'une pluralité de cellules préférentiellement adjacentes, couvrant un espace géographique dans lequel peuvent évoluer des stations mobiles.

Pour chaque cellule, les stations mobiles qui s'y trouvent établissent une communication avec une station de base couvrant la cellule correspondante.

Les données échangées entre les stations mobiles et les stations de base sont structurées en trames, selon une technique de multiplexage temporel de type AMRT (Accès Multiple à Répartition dans le Temps).

Cette technique consiste à diviser le temps en trames de durée fixe et prédéterminée, elles-mêmes divisées en intervalles de temps. Dans chaque intervalle de temps, on peut transmettre un paquet (ou "burst" en anglo-saxon). La récurrence d'un intervalle de temps particulier (par exemple le second) dans chacune des trames transmises successivement constitue un canal physique. Ainsi, si une trame comprend N intervalles de temps, il peut exister N canaux physiques.

Les canaux logiques (canaux de trafic ou canaux de signalisation) sont multiplexés sur des canaux physiques. En d'autres termes, un même canal physique est partagé dans le temps entre plusieurs canaux logiques. Les trames sont alors structurées en multitrames et un canal logique est défini par la récurrence d'une trame particulière dans chacune des multitrames transmises successivement. Ainsi, si une multitrame comprend M trames, un canal physique peut être partagé par M canaux logiques au maximum.

Pour pouvoir communiquer correctement avec une station de base, une station mobile doit se synchroniser temporellement avec celle-ci. On considère ici que cette synchronisation initiale est effecuée, le rôle du procédé de l'invention étant de conserver cette synchronisation temporelle initiale.

On rappelle en effet qu'il existe deux types de dérive temporelle qui rendent nécessaire la mise en oeuvre d'un tel procédé, à savoir :

- une première dérive temporelle due au décalage existant entre la fréquence de la porteuse de la station de base et la fréquence de la porteuse de la station mobile ;
- une seconde dérive temporelle due à l'éloignement géographique entre la station de base et la station mobile (influence du temps de propagation).

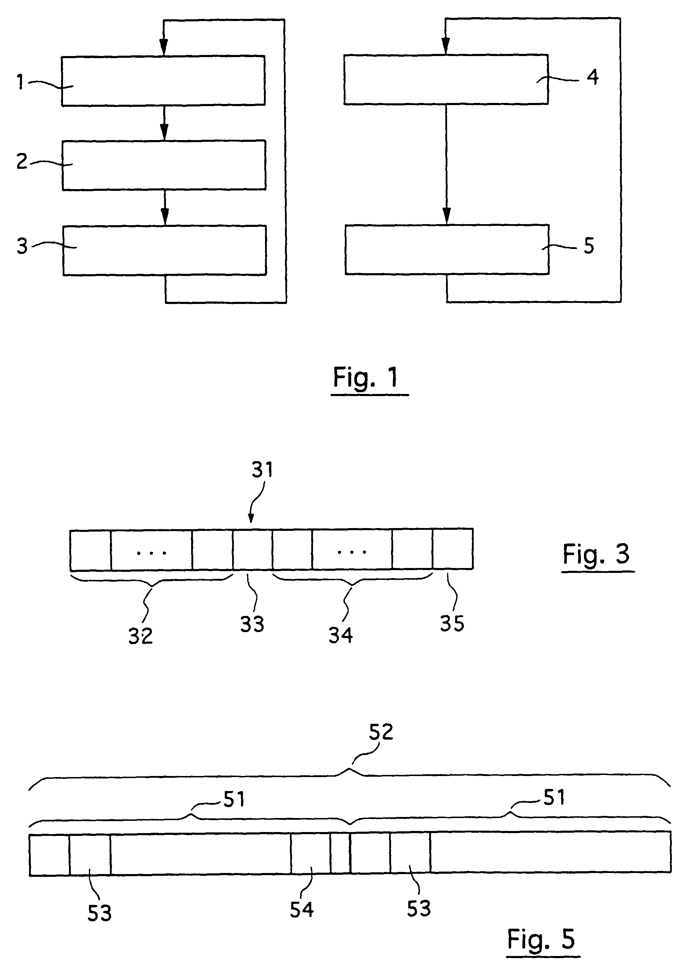

Comme présenté sur le schéma de principe de la figure 1, le procédé de l'invention, qui vise à corriger ces première et seconde dérives temporelles, comprend les étapes itératives suivantes :

*   concernant la première dérive temporelle :

    - mesure 1 du décalage fréquentiel entre la porteuse d'émission de la station de base et celle de la station mobile ;
    - transformation 2 de ce décalage fréquentiel en une première dérive temporelle ;
    - correction 3 de cette première dérive temporelle par modification de la longueur d'au moins une des trames (transmises ou reçues par) la station mobile, selon que la correction 3 se fait à l'émission ou à la réception ;

*   concernant la seconde dérive temporelle :

    - mesure 4 d'une seconde dérive temporelle due à l'éloignement géographique entre la station de base et la station mobile ;
    - correction 5 de cette seconde dérive temporelle par modification de la longueur d'au moins une des trames transmises ou reçues par la station mobile, selon que la correction 5 se fait à l'émission ou à la réception.

Par exemple, si, pendant une durée t, la mesure de la station mobile est décalée fréquentiellement de $\Delta F = 4,8$ kHz par rapport à la porteuse de la station de base de fréquence $F_{SB} = 959,8$ MHz, alors la première dérive temporelle pendant la durée t est :

$$D1_t = t.\Delta F/F \text{ (soit 5 } \mu s/s).$$

De même, après une durée t, si V est la vitesse radiale de la station mobile et C la vitesse de la lumière supposée égale à celle des ondes radio dans l'air, alors la seconde dérive temporelle pendant la durée t est :

$$D2_t = t.V/C \text{ (soit 0,266 } \mu s/s).$$

Avec une durée bit $d_b = 3,69 \mu s$ (cas d'un système GSM), ces valeurs extrêmes de première et seconde dérives temporelles pendant t sont respectivement de l'ordre de 1,5 bit/s et 0,07 bit/s.

D'une façon générale, et comme cela apparaît clairement à travers les deux exemples numériques précédents, la première dérive temporelle varie plus rapidement que la seconde temporelle. On corrige donc la première dérive temporelle plus souvent que la seconde dérive temporelle.

Par ailleurs, la mesure 1 du décalage fréquentiel et la mesure 4 de la seconde dérive temporelle sont de natures distinctes.

La correction 3 de la première dérive temporelle ne doit pas fausser la mesure 4 de la seconde dérive temporelle. Pour cela, on peut par exemple décaler les instants de mesure des valeurs de dérive temporelle instantanée d'une durée prédéterminée sensiblement fixe par rapport à des instants de correction de la première dérive temporelle. Ainsi, la première dérive temporelle a sensiblement la même influence sur toutes les valeurs de dérive temporelle instantanée mesurées.

On peut également prévoir que l'étape de correction 5 de la seconde dérive temporelle consiste à modifier la longueur d'une des trames dont la longueur est également modifiée dans l'étape de correction 3 de la première dérive temporelle. En d'autres termes, la période de correction de la première dérive temporelle est un multiple entier de la période de correction de la seconde dérive temporelle.

La suite de la description concerne plus particulièrement les systèmes répondant au strandard GSM (Groupe Spécial Mobile). Il est clair toutefois que l'invention n'est pas limitée à ce seul standard mais s'applique plus généralement à tous les systèmes de radiocommmunication numérique cellulaire mettant en oeuvre une technique du type AMRT.

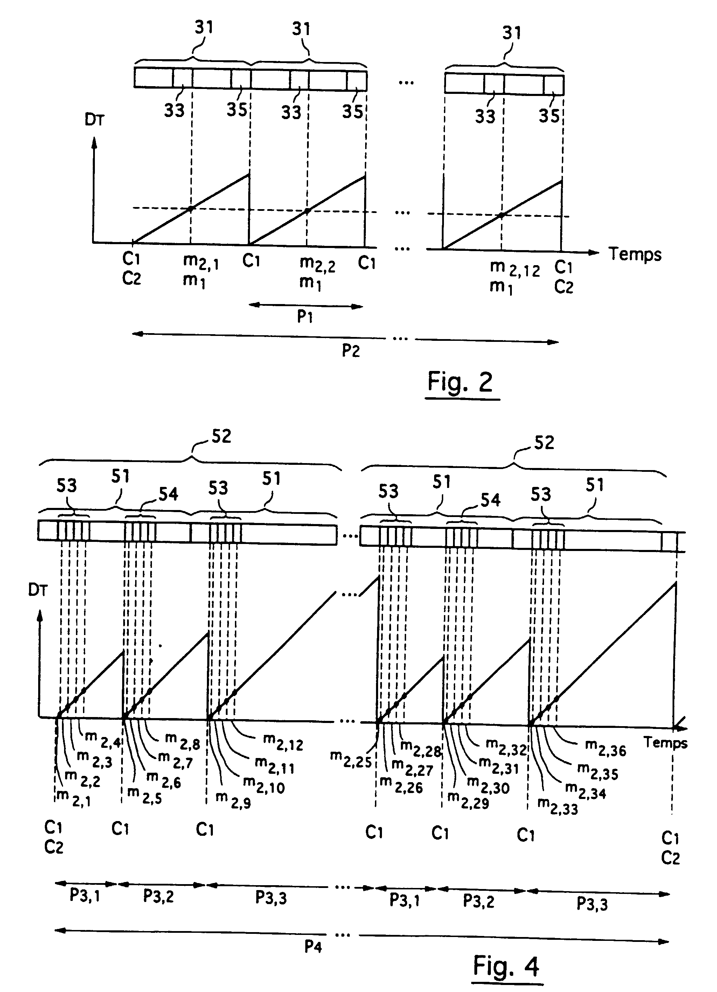

Deux modes de réalisation du procédé de l'invention sont présentés successivement (en relation avec les figures 2 et 3 et les figures 4 et 5 respectivement), et correspondent à deux structures de multitrame distinctes.

Le premier mode de réalisation du procédé de l'invention s'applique lorsque les multitrames possèdent la structure illustrée sur la figure 3. Dans ce cas particulier, une multitrame 31 comprend :

- 12 trames 32 associées à des canaux de trafic (TCH) ;
- 1 trame centrale 33 associée à un canal de contrôle associé lent (SACCH);
- 12 trames 34 associées à des canaux de trafic (TCH);
- 1 trame d'extrémité 35 non utilisée ("idle" en anglo-saxon).

La figure 2 présente un schéma explicatif de ce premier mode de réalisation. Dans la partie supérieure, on a représenté une succession de multitrames 31 du type présenté sur la figure 3. Dans la partie inférieure, et en relation avec la partie supérieure, on a représenté la variation de la dérive temporelle instantanée totale $D_T$ en fonction du temps. Cette dérive totale $D_T$ est la somme des première et seconde dérives temporelles.

Les étapes de mesures 1 d'un décalage fréquentiel, de transformation 2 de ce décalage en une première dérive temporelle, et de correction 3 de cette première dérive temporelle sont répétées avec une première période de temps $P_1$ correspondant à une multitrame 31.

Plus précisément, l'étape de mesure 1 d'un décalage fréquentiel est effectuée à la réception (instants référencés $m_1$) de la trame centrale (SACCH) 33 de chaque multitrame 31.

L'étape de transformation 2 est effectuée avec comme durée de référence (c'est-à-dire la durée pendant laquelle est mesurée la première dérive temporelle) la première période P1.

L'étape de correction 3 de la première dérive temporelle consiste, aux instants référencés C1, à modifier la longueur de la trame d'extrémité non utilisée 35 de chaque multitrame 31.

Les étapes de mesure 4 de la seconde dérive temporelle et de correction 5 de cette seconde dérive temporelle sont répétées avec une seconde période de temps P2 correspondant à un nombre prédéterminé (12 dans cet exemple) de multitrames successives 31. On a donc, dans cet exemple, P2 = 12 P1.

Plus précisément, l'étape de mesure 4 de la seconde dérive consiste à :

- prélever par exemple 12 valeurs de dérive temporelle instantanée (une sur chaque trame centrale 33 de multitrame 31, aux instants référencés $m_{2,1}$ à $m_{2,12}$) ;
- calculer la moyenne de ces 12 valeurs.

L'étape de correction 5 de la seconde dérive temporelle consiste, aux instant référencés C2, à modifier la longueur de la trame d'extrémité non utilisée 35 d'une des multitrames 31.

Le second mode de réalisation du procédé de l'invention s'applique lorsque les multitrames possèdent la structure illustrée sur la figure 5. Dans ce cas, les multitrames 51 sont regroupées par paire 52 de multitrames successives. Deux multitrames 51 d'une paire 52 comprennent notamment :

- chacune un premier bloc de trames 53 associé à un canal de contrôle dédié lent (SDCCH),
- l'une ou l'autre un second bloc de trames associé à un canal de contrôle associé lent (SACCH).

La figure 4 présente un schéma explicatif de ce second mode de réalisation. Dans la partie supérieure, on a représenté une succession de paires 52 de multitrames 51 du type présenté sur la figure 5. Dans la partie inférieure, et en relation avec la partie supérieure, on a représenté la variation de la dérive temporelle instantanée totale $D_T$ en fonction du temps.

Les étapes de mesure 1 d'un décalage fréquentiel, de transformation 2 de ce décalage fréquentiel en une première dérive temporelle, et de correction 3 de cette première dérive temporelle sont répétées avec une troisième période de temps variable $P_{3,1}$ à $P_{3,3}$ correspondant à l'écart entre deux blocs de trames 53,54 consécutifs.

Plus précisément, l'étape de mesure 1 d'un décalage fréquentiel est effectuée à la réception d'au moins une trame de chacun des premiers et seconds blocs de trames 53, 54 de chaque multitrame 51.

L'étape de transformation 2 est effectuée avec comme durée de référence la troisième période variable $P_{3,1}$ à $P_{3,3}$.

L'étape de correction 3 de la première dérive temporelle consiste, aux instants référencés C1, à modifier la longueur d'une trame précédant un premier ou second bloc de trames.

Les étapes de mesure 4 d'une seconde dérive temporelle et de correction 5 de celle-ci sont répétées avec une quatrième période de temps $P_4$ correspondant à un nombre prédéterminé (3 dans cet exemple) de paires 52 de multitrames successives.

Plus précisément, l'étape de mesure 4 de la seconde dérive consiste à :

- prélever par exemple 36 valeurs de dérive temporelle instantanée (une sur chacune des 4 trames de chacun des premiers et seconds blocs 53,54, aux instants référencés $m_{2,1}$ à $m_{2,36}$);
- calculer la moyenne de ces 36 valeurs.

L'étape de correction 5 de la seconde dérive temporelle consiste, aux instants référencés C2, à modifier la longueur d'une trame également modifiée par la correction 3 de la première dérive temporelle.

## Revendications

1. Procédé de conservation de la synchronisation temporelle d'une station mobile par rapport à une station de base à, dans un système de radiocommunication numérique cellulaire véhiculant des données sous forme de trames et à accès multiple par répartition dans le temps,
caractérisé en ce qu'il comprend les étapes itératives suivantes :

   - mesure (1) d'un décalage fréquentiel entre la fréquence de la porteuse d'émission de la station de base à et la fréquence de la porteuse d'émission de la station mobile ;
   - transformation (2) dudit décalage fréquentiel en une première dérive temporelle ;
   - correction (3) de ladite première dérive temporelle par modification de la longueur d'au moins une desdites trames ;
   - mesure (4) d'une seconde dérive temporelle due à l'éloignement géographique entre la station de base et la station mobile ;
   - correction (5) de ladite seconde dérive temporelle par modification de la longueur d'au moins une desdites trames.

2. Procédé selon la revendication 1, caractérisé en ce que ladite étape de mesure (4) d'une seconde dérive temporelle consiste à mesurer, à au moins deux instants de mesure distincts ($m_{2,1}$ à $m_{2,12}$ ; $m_{2,1}$ à $m_{2,36}$), au moins deux valeurs de dérive temporelle instantanée, puis à calculer la moyenne desdites au moins deux valeurs de dérive temporelle instantanée.

3. Procédé selon la revendication 2, caractérisé en ce que chacun desdits instants ($m_{2,1}$ à $m_{2,12}$ ; $m_{2,1}$ à $m_{2,36}$) de mesure d'une valeur de dérive temporelle instantanée est décalé dans le temps d'une durée prédéterminée sensiblement fixe par rapport à un instant (C1) de réalisation de ladite étape de correction (3) de la première dérive temporelle .

4. Procédé selon l'une quelconque des revendications 1 à 3, caractérisé en ce que ladite étape de correction (5) de la seconde dérive temporelle consiste à modifier la longueur d'une des trames (35) dont la longueur est également modifiée dans l'étape de correction (3) de la première dérive temporelle.

5. Procédé selon l'une quelconque des revendications 1 à 4, caractérisé en ce que ledit système de radiocommunication numérique cellulaire est du type GSM.

6. Procédé selon l'une quelconque des revendications 1 à 5, lesdites trames (32 à 35) étant regroupées en multitrames (31),
caractérisé en ce que lesdites étapes de mesure (1) d'un décalage fréquentiel, de transformation (2) du décalage fréquentiel en une première dérive temporelle, et de correction (3) de la première dérive temporelle sont répétées avec une première période de temps (P1) correspondant à une multitrame (31).

7. Procédé selon la revendication 6, chaque multitrame (31) comprenant notamment une trame centrale (33) associée à un canal de contrôle associé lent (SACCH), et une trame d'extrémité (35) non utilisée,
caractérisé en ce que ladite étape de mesure (1) d'un décalage fréquentiel est effectuée à la réception de ladite trame centrale (33) de chaque multitrame (31),
et en ce que ladite étape de transformation (2) du décalage fréquentiel en une première dérive temporelle est effectuée avec comme durée de référence ladite première période de temps (P1) correspondant à l'écart entre deux trames centrales (33) de deux multitrames successives (31).

8. Procédé selon l'une quelconque des revendications 6 et 7, caractrisé en ce que ladite étape de correction (3) de la première dérive temporelle consiste à modifier la longueur de ladite trame d'extrémité (35) non utilisée de chaque multitrame (31).

9. Procédé selon l'une quelconque des revendications 6 à 8, caractérisé en ce que lesdites étapes de mesure (4) d'une seconde dérive temporelle et de correction (5) de la seconde dérive temporelle sont répétées avec une seconde période de temps (P2) correspondant à un nombre prédéterminé de multitrames successives (31).

10. Procédé selon les revendications 2 et 9, caractérisé en ce qu'une valeur de dérive temporelle instantanée est mesurée ($m_{2,1}$ à $m_{2,12}$) sur ladite trame centrale (33) de chaque multitrame (31), et en ce que ladite moyenne est calculée sur un nombre de valeurs de dérive temporelle instantanée égal audit nombre prédéterminé de multitrames successives auquel correspond ladite seconde période de temps.

11. Procédé selon l'une quelconque des revendications 1 à 5, les trames étant regroupées en paires (52) de multitrames (51), deux multitrames successives (51) d'une paire (52) comprenant notamment :

- chacune un premier bloc de trames (53) associé à un canal de contrôle dédié lent (SDCCH),
- l'une ou l'autre un second bloc de trames (54) associé à un canal de contrôle associé lent (SACCH),

caractérisé en ce que lesdites étapes de mesure (1) d'un décalage fréquentiel, de transformation (2) du décalage fréquentiel en une première dérive temporelle, et de correction (3) de la première dérive temporelle sont répétées avec une troisième période de temps variable ($P_{3,1}$ à $P_{3,3}$) correspondant à l'écart entre deux desdits blocs de trames (53, 54) consécutifs.

12. Procédé selon la revendication 11, caractérisé en ce que ladite étape de mesure (1) d'un décalage fréquentiel est effectuée à la réception d'au moins une trame de chacun desdits premier et seconds blocs de trames (53, 54) de chaque multitrame (51), et en ce que ladite étape de transformation (2) du décalage fréquentiel en une première dérive temporelle est effectuée avec comme durée de référence ladite troisième période de temps ($P_{3,1}$ à $P_{3,3}$) correspondant à l'écart entre deux trames sur lesquelles est réalisée successivement ladite étape de mesure (1) d'un décalage fréquentiel.

13. Procédé selon la revendication 12, caractérisé en ce que ladite étape de correction (3) de la première dérive temporelle consiste à modifier la longueur d'une trame précédant un desdits premier ou second bloc de trames (53, 54) de chaque multitrame (51).

14. Procédé selon l'une quelconque des revendications 11 à 13, caractérisé en ce que lesdites étapes de mesure (4) d'une seconde dérive temporelle et de correction (5) de la seconde dérive temporelle sont répétées avec une quatrième période de temps (P4) correspondant à un nombre prédéterminé de paires (52) de multitrames successives (51).

15. Procédé selon les revendications 2 et 14, caractérisé en ce qu'une valeur de dérive temporelle instantanée est mesurée ($m_{2,1}$ à $m_{2,36}$) sur chacune des trames de chacun des premiers et seconds blocs de trames (53, 54), et en ce que ladite moyenne est calculée sur un nombre de valeurs de dérive temporelle instantanée égal au nombre de trames comprises dans les premiers et seconds blocs de trames (53, 54) de paires 52) de multitrames successives (51) auxquelles correspond ladite quatrième période de temps (P4) sensiblement fixe.

**Patentansprüche**

1. Verfahren zum Bewahren der zeitlichen Synchronisation einer mobilen Station in Bezug zu einer Basisstation in einem zellularen digitalen Funkkommunikationssystem, das Daten in Form von Rahmen und im Vielfachzugriff im Zeitmultiplex überträgt, dadurch gekennzeichnet, daß es die folgenden iterativen Schritte umfaßt:

- Messen (1) einer Frequenzverschiebung zwischen der Frequenz des Sendeträgers der Basisstation und der Frequenz des Sendeträgers der mobilen Station;

- Umwandeln (2) der Frequenzverschiebung in eine erste Zeitdrift;

- Korrigieren (3) der ersten Zeitdrift durch Verändern der Länge wenigstens eines der Rahmen;

- Messen (4) einer zweiten Zeitdrift aufgrund der geographischen Entfernung zwischen der Basisstation und der mobilen Station;

- Korrigieren (5) der zweiten Zeitdrift durch Verändern der Länge wenigstens eines der Rahmen.

2. Verfahren nach Anspruch 1, dadurch gekennzeichnet, daß der Schritt des Messens (4) einer zweiten Zeitdrift darin besteht, an wenigstens zwei verschiedenen Meßzeitpunkten ($m_{2,1}$ bis $m_{2,12}$; $m_{2,1}$ bis $m_{2,36}$) wenigstens zwei momentane Zeitdriftwerte zu messen, dann den Mittelwert dieser wenigstens zwei momentanen Zeitdriftwerte zu berechnen.

3. Verfahren nach Anspruch 2, dadurch gekennzeizchnet, daß jeder der Zeitpunkte ($m_{2,1}$ bis $m_{2,12}$; $m_{2,1}$ bis $m_{2,36}$) des Messens eines momentanen Zeitdriftwertes um eine im wesentlichen feste vorgegebene Dauer zeitverschoben ist in Bezug auf einen Zeitpunkt (C1) der Ausführung des Schrittes des Korrigierens (3) der ersten Zeitdrift.

4. Verfahren nach einem der Ansprüche 1 bis 3, dadurch gekennzeichnet, daß der Schritt des Korrigierens (5) der zweiten Zeitdrift darin besteht, die Länge eines der Rahmen (35) zu verändern, dessen Länge auch im Schritt des Korrigierens (3) der ersten Zeitdrift verändert wird.

5. Verfahren nach einem der Ansprüche 1 bis 4, dadurch gekennzeichnet, daß das zellulare digitale Funkkommunikationssystem vom Typ GSM ist.

6. Verfahren nach einem der Ansprüche 1 bis 5, wobei die Rahmen (32-35) in Multirahmen (31) zusammengefaßt sind, dadurch gekennzeichnet, daß die Schritte des Messens (1) einer Frequenzverschiebung, des Umwandelns (2) der Frequenzverschiebung in eine erste Zeitdrift und des Korrigierens (3) der ersten Zeitdrift mit einer ersten Zeitperiode (P1) entsprechend einem Multirahmen (31) wiederholt werden.

7. Verfahren nach Anspruch 6, wobei jeder Multirahmen (31) insbesondere einen einem langsamen assoziierten Steuerkanal (SACCH) zugeordneten zentralen Rahmen (33) und einen nicht verwendeten Endrahmen (35) umfaßt, dadurch gekennzeichnet, daß der Schritt des Messens (1) einer Frequenzverschiebung beim Empfang des zentralen Rahmens (33) jedes Multirahmens (31) ausgeführt wird, und daß der Schritt des Umwandelns (2) der Frequenzverschiebung in eine erste Zeitdrift mit als Referenzdauer der ersten Zeitperiode (P1) ausgeführt wird, die der Abstand zwischen zwei zentralen Rahmen (33) von zwei aufeinanderfolgenden Multirahmen (31) entspricht.

8. Verfahren nach einem der Ansprüche 6 und 7, dadurch gekennzeichnet, daß der Schritt des Korrigierens (3) der ersten Zeitdrift darin besteht, die Länge des nicht verwendeten Endrahmens (35) jedes Multirahmens (31) zu verändern.

9. Verfahren nach einem der Ansprüche 6 bis 8, dadurch gekennzeichnet, daß die Schritte des Messens (4) einer zweiten Zeitdrift und des Korrigierens (5) der zweiten Zeitdrift mit einer zweiten Zeitperiode (P2) wiederholt werden, die einer vorgegebenen Zahl aufeinanderfolgender Multirahmen (31) entspricht.

10. Verfahren nach den Ansprüchen 2 und 9, dadurch gekennzeichnet, daß ein momentaner Zeitdriftwert an dem zentralen Rahmen (33) jedes Multirahmens (31) gemessen ($m_{2,1}$ bis $m_{2,12}$) wird, und daß der Mittelwert über eine Zahl von momentanen Zeitdriftwerten gleich der vorgegebenen Zahl von aufeinanderfolgenden Multirahmen berechnet wird, der die zweite Zeitperiode entspricht.

11. Verfahren nach einem der Ansprüche 1 bis 5, wobei die Rahmen in Paare (52) von Multirahmen (51) zusammengefaßt sind und zwei aufeinanderfolgende Multirahmen (51) eines Paares (52) insbesondere umfassen:

- jeder einen ersten, einem langsamen dedizierten Steuerkanal (SDCCH) zugeordneten Block von Rahmen (53),

- der eine oder der andere einen zweiten, einem langsamen assoziierten Steuerkanal (SACCH) zugeordneten Block von Rahmen (54),

dadurch gekennzeichnet, daß die Schritte des Messens (1) einer Fiequenzverschiebung, des Umwandelns (2) der Frequenzverschiebung in eine erste Zeitdrift und des Korrigierens (3) der ersten Zeitdrift mit einer dritten variablen Zeitperiode ($P_{3,1}$ bis $P_{3,3}$) wiederholt werden, die dem Abstand zwischen zwei der aufeinanderfolgenden Blöcke von Rahmen (53, 54) entspricht.

12. Verfahren nach Anspruch 11, dadurch gekennzeichnet, daß der Schritt des Messens (1) einer Frequenzverschiebung beim Empfang wenigstens eines Rahmens jedes der ersten und zweiten Blöcke von Rahmen (53, 54) jedes Multirahmens (51) durchgeführt wird, und daß der Schritt des Umwandelns (2) der Frequenzverschiebung in eine Zeitdrift mit als Referenzdauer der dritten Zeitperiode ($P_{3,1}$ bis $P_{3,3}$) durchgeführt wird, die dem Abstand zwischen zwei Rahmen entspricht, an denen nacheinander der Schritt des Messens (1) einer Frequenzverschiebung durchgeführt wird.

13. Verfahren nach Anspruch 12, dadurch gekennzeichnet, daß der Schritt des Korrigierens (3) der ersten Zeitdrift darin besteht, die Länge eines Rahmens zu verändern, der dem ersten oder dem zweiten Block von Rahmen (53, 54) jedes Multirahmens (51) vorangeht.

14. Verfahren nach einem der Ansprüche 11 bis 13, dadurch gekennzeichnet, daß die Schritte des Messens (4) einer zweiten Zeitdrift und des Korrigierens (5) der zweiten Zeitdrift mit einer vierten Zeitperiode (P4) wiederholt werden, die einer vorgegebenen Zahl von Paaren (52) von aufeinanderfolgenden Multirahmen (51) entspricht.

15. Verfahren nach den Ansprüchen 2 und 14, dadurch gekennzeichnet, daß ein momentaner Zeitdriftwert an jedem der Rahmen des ersten und des zweiten Blocks von Rahmen (53, 54) gemessen ($m_{2,1}$ bis $m_{2,36}$) wird, und daß der Mittelwert berechnet wird über eine Zahl von momentanen Zeitdriftwerten gleich der Zahl von Rahmen, die in den ersten und zweiten Blöcken von Rahmen (53, 54) von Paaren (52) von aufeinanderfolgenden Multirahmen (51) enthalten sind, denen die im wesentlichen feste vierte Zeitperiode (P4) entspricht.

**Claims**

1. A method of maintaining the time synchronization of a mobile station relative to a base station, in a cellular digital radiocommunications system conveying data in the form of time-division multiple access frames;

   said method being characterized in that it comprises the following iterative steps:
   measuring (1) a frequency offset between the frequency of the transmission carrier of the base station and the frequency of the transmission carrier of the mobile station;
   transforming (2) said frequency offset into a first time drift;
   correcting (3) said first time drift by modifying the length of at least one of said frames;
   measuring (4) a second time drift due to the geographical distance between the base station and the mobile station; and
   correcting (5) said second time drift by modifying the length of at least one of said frames.

2. A method according to claim 1, characterized in that said step of measuring (4) a second time drift consists in measuring at least two instantaneous time drift values at at least two distinct measurement instants ($m_{2,1}$ to $m_{2,12}$ ; $m_{2,1}$ to $m_{2,36}$), and then in computing the mean of said at least two instantaneous time drift values.

3. A method according to claim 2, characterized in that each of said measurement instants ($m_{2,1}$ to $m_{2,12}$ ; $m_{2,1}$ to $m_{2,36}$) at which an instantaneous time drift value is measured is offset in time by a substantially fixed predetermined duration relative to an instant (C1) at which said step of correcting (3) the first time drift is performed.

4. A method according to any one of claims 1 to 3, characterized in that said step of correcting (5) the second time drift consists in modifying the length of one of the frames (35) whose length is also modified in the step of correcting (3) the first time drift.

5. A method according to any one of claims 1 to 4, characterized in that said cellular digital radio-communications system is of the GSM type.

6. A method according to any one of claims 1 to 5, said frames (32 to 35) being grouped together into multiframes (31);
   said method being characterized in that said steps of measuring (1) a frequency difference, of transforming (2) the frequency difference into a first time drift, and of correcting (3) the first time drift are repeated with a first time period (P1) corresponding to one multiframe (31).

7. A method according to claim 6, each multiframe (31) including, in particular, a central frame (33) associated with a slow associated control channel (SACCH), and an unused end frame (35);

   said method being characterized in that said step of measuring (1) a frequency offset is performed on receiving said central frame (33) of each multiframe (31);
   and in that said step of transforming (2) the frequency offset into a first time drift is performed with, as a reference duration, said first time period (P1) corresponding to the difference between two central frames (33) of two successive multiframes (31).

8. A method according to claim 6 or 7, characterized in that said step of correcting (3) the first time drift consists in modifying the length of said unused end frame (35) of each multiframe (31).

9. A method according to any one of claims 6 to 8, characterized in that said steps of measuring (4) a second time drift and of correcting (5) the second time drift are repeated with a second time period (P2) corresponding to a predetermined number of successive multiframes (31).

**10.** A method according to claims 2 and 9, characterized in that an instantaneous time drift value is measured ($m_{2,1}$ to $m_{2,12}$) on said central frame (33) of each multiframe (31), and in that said mean is computed over a number of instantaneous time drift values that is equal to said predetermined number of successive multiframes to which said second time period corresponds.

**11.** A method according to any one of claims 1 to 5, the frames being grouped together in pairs (52) of multiframes (51), each of the two successive multiframes (51) in a pair (52) including, in particular, a first block of frames (53) associated with a slow dedicated control channel(SDCCH), and either one of said two successive multiframes in a pair including, in particular, a second block of frames (54) associated with a slow associated control channel (SACCH);

said method being characterized in that said steps of measuring (1) a frequency offset, of transforming (2) the frequency offset into a first time drift, and of correcting (3) the first time drift are repeated with a variable third time period ($P_{3,1}$ to $P_{3,3}$) corresponding to the difference between two consecutive ones of said blocks of frames (53, 54).

**12.** A method according to claim 11, characterized in that said step of measuring (1) a frequency offset is performed on receiving at least one frame from each of said first and second blocks of frames (53, 54) of each multiframe (51);

and in that said step of transforming (2) the frequency offset into a first time drift is performed with, as a reference duration, said third time period ($P_{3,1}$ to $P_{3,3}$) corresponding to the difference between two frames on which said step of measuring (1) a frequency offset is performed successively.

**13.** A method according to claim 12, characterized in that said step of correcting (3) the first time drift consists in modifying the length of a frame preceding one of said first or second blocks of frames (53, 54) of each multiframe (51).

**14.** A method according to any one of claims 11 to 13, characterized in that said steps of measuring (4) a second time drift and of correcting (5) the second time drift are repeated with a fourth time period (P4) corresponding to a predetermined number of pairs (52) of successive multiframes (51).

**15.** A method according to claims 2 and 14, characterized in that an instantaneous time drift value is measured ($m_{2,1}$ to $m_{2,36}$) on each of the frames of each of the first and second blocks of frames (53, 54), and in that said mean is computed over a number of instantaneous time drift values that is equal to the number of frames contained in the first and second blocks of frames (53, 54) of pairs (52) of successive multiframes (51) corresponding to said fourth time period (P4) which is substantially fixed.

1

2

3

4

5

<u>Fig. 1</u>

31

32    33    34    35

<u>Fig. 3</u>

52

51    51

53    54    53

<u>Fig. 5</u>

Fig. 2

Fig. 4